Europäisches Patentamt

European Patent Office (11) Numéro de publication: **0 141 729**

Office européen des brevets **A2**

(19)

(12) # DEMANDE DE BREVET EUROPEEN

(21) Numéro de dépôt: **84402132.9**

(51) Int. Cl.⁴: **G 06 K 11/06,** G 06 F 3/037

(22) Date de dépôt: **23.10.84**

(30) Priorité: **28.10.83 FR 8317319**

(43) Date de publication de la demande: **15.05.85 Bulletin 85/20**

(84) Etats contractants désignés: **DE GB IT NL**

(71) Demandeur: **THOMSON-CSF, 173, Boulevard Haussmann, F-75379 Paris Cedex 08 (FR)**

(72) Inventeur: **Arditty, Hervé, THOMSON-CSF SCPI 173, bld Haussmann, F-75379 Paris Cedex 08 (FR)**
Inventeur: **Puech, Claude, THOMSON-CSF SCPI 173, bld Haussmann, F-75379 Paris Cedex 08 (FR)**

(74) Mandataire: **Lepercque, Jean et al, THOMSON-CSF SCPI 173, Bld Haussmann, F-75379 Paris Cedex 08 (FR)**

(54) **Dispositif sensitif d'affichage comportant un écran à balayage.**

(57) Le dispositif de l'invention comporte un écran à balayage devant lequel est disposé une plaque (2) en matériau transparent, un détecteur (11) étant couplé à la tranche de cette plaque (2) une position spécifique sur cette plaque (2) est déterminée par contact d'un objet diffusant (4).

Le détecteur (11) capte un signal qui après traitement permet de connaitre la position de ce point de contact (2).

Application, notamment, comme interface entre un ordinateur et un utilisateur.

# DISPOSITIF SENSITIF D'AFFICHAGE COMPORTANT
## UN ECRAN A BALAYAGE.

L'invention concerne un dispositif sensitif d'affichage comportant un écran à balayage.

Le tube cathodique à balayage de type télévision est, de très loin, l'interface de sortie la plus utilisée entre un ordinateur et un utilisateur. L'interface d'entrée correspondant est presque toujours un clavier de type "machine à écrire" pour les applications générales, constitué seulement de quelques boutons poussoirs pour certaines applications spécifiques. Cet interface d'entrée constitue souvent un goulot d'étranglement, d'abord parce qu'il requiert d'un opérateur non entraîné une attention soutenue qui le distrait de l'écran, ensuite parce qu'il ne présente que peu de souplesse et ne permet pas une reconfiguration facile en fonction de l'application, enfin parce que son prix et son manque de fiabilité tendent à dégrader fortement l'espérance de marché pour la plupart de ses applications.

Afin de pallier ces inconvénients, un certain nombre de moyens permettant à l'opérateur de pointer un endroit spécifique de l'écran cathodique, en réponse à une question ou pour indiquer un choix sur un menu par exemple, ont été proposés :

Le plus connu est le photostyle ou "light-pen", où un stylet tenu par l'opérateur, contenant une optique et un photodétecteur et relié par l'intermédiaire de l'électronique appropriée à l'ordinateur, indique à celui-ci l'endroit de l'écran où il est pointé par la phase relative d'un top correspondant au passage du spot lumineux qu'il détecte par rapport à la séquence de balayage. C'est le système le plus performant car il est excessivement simple et permet une excellente résolution (par exemple $10^4$ points). Il présente cependant l'inconvénient de nécessiter la manipulation d'un objet, et apporte une certaine fragilité au système à cause du lien électrique souple qui le relie au terminal.

Deux classes de procédés permettant à l'opérateur de pointer directement une position sur l'écran avec le doigt ont été proposées pour pallier cet inconvénient :

Dans la première catégorie, c'est le contact ou la pression du doigt sur une plaque transparente, intercalée entre l'écran et l'observateur, qui est détectée, soit par conduction (feuilles en matériau plastique, porteuses d'électrodes croisées en matrice, ou plaque de verre revêtue d'une couche d'oxyde conducteur et utilisant un effet de pont résistif), soit la variation de l'impédance acoustique que présente le point touché.

Dans la seconde catégorie, c'est la position du doigt qui est détectée par ce qu'il interrompt au moins deux faisceaux lumineux croisés, dont l'un fait partie d'une grille verticale (par exemple, rangée de photo-émetteurs situés en bas de l'écran et rangée de photodétecteurs situés en haut de l'écran) et l'autre d'une grille horizontale (émetteur respectivement à droite et à gauche de l'écran, par exemple).

Ces systèmes ont en commun une relativement mauvaise résolution, une fiabilité assez basse, en particulier pour un opérateur non informé du procédé employé, et une électronique comportant un nombre élevé de composants. Leur prix est actuellement relativement élevé.

Le dispositif de l'invention permet de pallier ces inconvénients en utilisant une plaque d'un matériau transparent placée à proximité de l'écran cathodique, un photodétecteur étant positionné sur la tranche de cette plaque.

L'invention a pour objet un dispositif sensitif d'affichage comportant un écran à balayage, sur lequel se déplace une tache lumineuse, des moyens de détection du pointage d'au moins une position spécifique de cet écran délivrant un signal relatif à cette position et des moyens de traitement de ce signal caractérisé en ce qu'il comporte en outre un guide d'onde plan en matériau transparent disposé devant cet écran à balayage, un moyen diffusant permettant ce pointage par contact avec ce guide d'onde, les moyens de détection du pointage comportant des moyens détecteurs couplés à au moins une extrémité de ce guide d'onde, ce guide d'onde plan transmettant intégralement la lumière issue de la tache lumineuse en absence de pointage d'une position et piègeant cette lumière issue de la tache lumineuse lors du pointage d'au moins une position par recouplage dans ce guide de la lumière transmise à travers ce guide d'onde jusqu'à l'objet diffusant et transmission de cette lumière par réflexions successives vers ces moyens photodétecteurs.

3

D'autres caractéristiques et avantages de l'invention apparaitront dans la description ci-après, en référence aux figures annexées où :

- les figures 1 et 2 représentent deux vues en coupe du dispositif de l'invention.

- la figure 3 représente différente courbes explicatives du fonctionnement du dispositif de l'invention.

- les figures 4 à 11 illustrent différentes variantes du dispositif de l'invention.

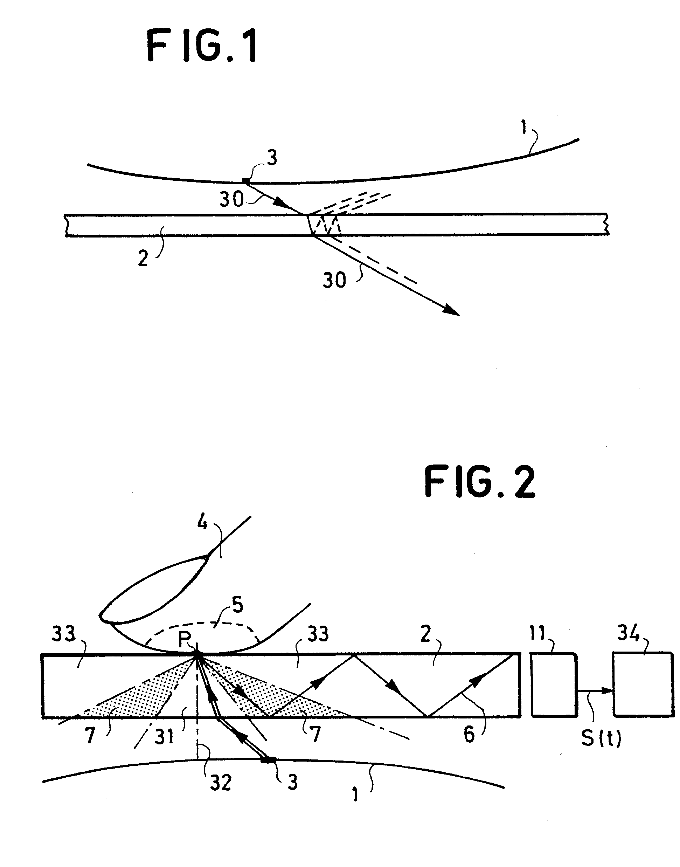

Comme représenté à la figure 1, si une plaque 2 de matériau transparent, d'indice évidemment supérieur à celui de l'air qui l'entoure, est placée à proximité d'un écran cathodique 1, la lumière issue, à un instant donné et dans une direction donnée, du spot lumineux 3 de balayage traverse cette plaque 2 sans altération notable. Une légère perte par réflexion de Fresnel se produit lors du passage du premier interface (air-matière), une réfraction rapproche le rayon 30 considéré de la normale à la surface au point de traversée, une seconde réflexion de Fresnel d'importance similaire (inférieure à 5 % pour la plupart des matériaux) caractérise le passage du second interface (matière-air), et la réfraction éloigne à nouveau le rayon 30 de la normale, le ramenant si la plaque présente des faces localement parallèles, parallèle à sa direction d'origine.

La fraction de rayonnement réfléchie lors du passage du second interface va se propager au sein de la plaque par réflexions successives mais, l'angle demeurant constant (toujours dans l'hypothèse de faces parallèles) va se trouver très rapidement atténué car seul le vingtième environ de la lumière est conservé à chaque réflexion.

Il en va de même de la lumière du spot cathodique réfléchie par un objet (spéculaire ou diffusant) situé proche de l'écran, ainsi que de toute lumière issue d'une source extérieure.

Aucune lumière, à l'exception d'un bruit de fond peu important, n'atteint donc la tranche de la plaque transparente si celle-ci est protégée par un cadre opaque.

On suppose maintenant qu'un objet 4 présentant une réflexion diffuse non nulle et d'un indice supérieur à celui de l'air qui l'entoure, par exemple un doigt, soit placé en contact 5 optique local avec un point de la plaque transparente. Cet objet reçoit un éclairement du spot cathodique qui présente un maximum très accentué lorsque ledit spot est situé directement en face de l'objet diffusant. La réflexion diffuse comporte des rayons dans un demi espace délimité par l'interface plaque-objet et dirigé vers le tube 1 travers de la plaque comme représenté à la figure 2.

Ces rayons se rangent en trois catégories :

a) Ceux qui sont situés dans un cône 31 plein axé sur la normale 32 à l'interface et de demi-angle au sommet égal à l'angle critique pour l'interface matière transparente-air vont se comporter comme les rayons décrits précédemment et n'atteindront pas la tranche de la plaque 2.

b) Ceux situés dans l'espace 33 d'angle solide compris entre le cône de même axe mais de demi-angle égal à l'angle critique de l'interface objet-matière transparente (lorsque cet angle est réel) et $\pi/2$ ne pénétreront pas la plaque et retourneront éclairer l'objet diffusant.

c) Ceux, enfin, situés dans le cône creux 7 de même axe dont le demi-angle intérieur est l'angle critique de l'interface matière transparente-air et dont le demi-angle extérieur est l'angle critique de l'interface objet diffusant-matière transparente (lorsque cet angle est réel, $\pi/2$ lorsqu'il ne l'est pas) se trouvent, par rapport à la face opposée de la plaque transparente, en position de réflexion interne totale et, sauf si le point d'origine est situé trop à l'intérieur de la surface de contact optique, il en sera de même des réflexions successives sur les deux surfaces de la plaque.

Les rayons faisant partie du troisième groupe sont donc, dans leur majorité, capturés au sein de la plaque 2 et guidés par elle, sans autre atténuation que l'absorption de la matière ou les diffusions sur les défauts de volume ou de surface, jusqu'à atteindre un des bords de cette plaque.

L'exemple d'un tel rayon 6 est donné à la figure 2. Le photodétecteur, 11, couplé à la tranche de la lame 2 permet de détecter de tels rayons. Il délivre un signal S(t) envoyé sur des moyens de traitement qui permettent de connaitre la position du point P de contact.

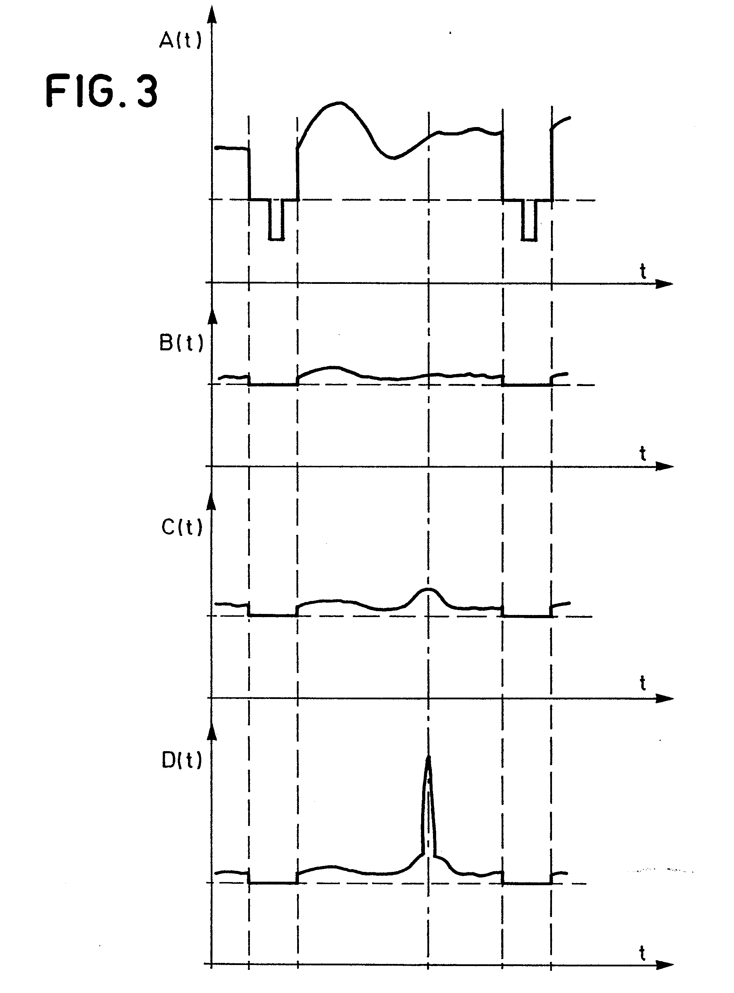

La figure 3 représente différents signaux obtenus par le dispositif de l'invention. Le signal A(t) représente une ligne vidéo. Si un photodétecteur est placé face à un des bords de la plaque 2 transparente, lorsqu'aucun objet diffusant n'est présent, le détecteur ne reçoit qu'une très faible quantité de lumière, dont la part vidéo appliqué au tube cathodique et dont une fraction plus faible provient de l'éclairement ambiant. Ainsi le signal B(t) représente le bruit de fond en l'absence d'objet diffusant.

Si un objet diffusant de dimensions faibles, le bout d'un objet par exemple, est approché de la plaque sans faire contact avec celle-ci, seule une très légère bosse apparaît superposée au signal faible détecté (ce signal peut cependant être utilisé si nécessaire), on obtient alors le signal détecté C(t).

Si par contre l'objet diffusant rentre en contact optique local avec la plaque, soit parce qu'il est humide, soit parce qu'il formé d'une matière suffisamment molle pour se conformer étroitement à la surface de la plaque en chassant l'air interstitiel, un pic très important apparaît dans le signal optique temporel reçu par le photodétecteur. Le signal obtenu D(t) présente les mêmes caractéristiques générales que celui reçu par un "light-pen" évoqué précedemment et permet donc, comme pour lui la détermination, par comparaison de la phase relative du top avec celle du balayage vidéo, de la position du point désigné.

Il est aussi possible de considérer plusieurs points définis par contact optique avec la plaque (2).

Ce signal D(t) recueilli présente une résolution relativement faible, due à la fois à l'absence d'optique de focalisation et à la dimension du doigt qui peut être utilisé pour le pointage. Mais il présente deux avantages très intéressants :

- Le signal en question comporte de façon non équivoque l'information de contact effectif, qui constitue une validation de la volonté de pointage, et ce, sans contact additionnel.

- Et surtout, la même fonction est accomplie sans la manipulation d'aucun objet extérieur et, pour l'opérateur, le terminal ainsi équipé, dont la plaque transparente peut remplir également l'office de protection du tube ou même faire partie de celui-ci, ne se différentie en rien d'un moniteur de télévision classique.

La simplicité, la fiabilité et la facilité d'emploi inégalées du dispositif ainsi réalisé en font une interface "homme-machine" particulièrement performante.

Un certain nombre de variantes du dispositif de l'invention peuvent être mises en oeuvre afin d'augmenter la fiabilité de détection dans les cas difficiles (point de contact optique très distant du photodétecteur, zone d'image sombre...).

La plaque transparente guide la fraction de lumière capturée jusqu'à ses bords sans favoriser de direction particulière. Celle-ci, étant elle-même émise, dans le cas général, de façon à peu près isotrope, se trouve approximativement uniformément répartie sur le périmètre de la plaque. Un seul détecteur monolithique, même s'il a la forme idéale (c'est à dire une largeur supérieure ou égale à l'épaisseur de la plaque, et la longueur la plus grande possible) et s'il est placé au contact même de la tranche, ne reçoit qu'une faible fraction de ce rayonnement.

Une bien meilleure efficacité de collection est réalisée si plusieurs détecteurs sont placés en différents points du périmètre de la plaque. Leur position peut être optimisée de façon à ce que, lorsque la position de pointage est telle que l'un d'entre eux travaille dans de mauvaises conditions (éclairage rasant par exemple), au moins un autre soit dans des conditions acceptables (proche du point et face à lui).

Le cas limite est celui d'une bande souple, ou conformable, sensible à la lumière et appliquée à toute ou partie de la périphérie de l'écran.

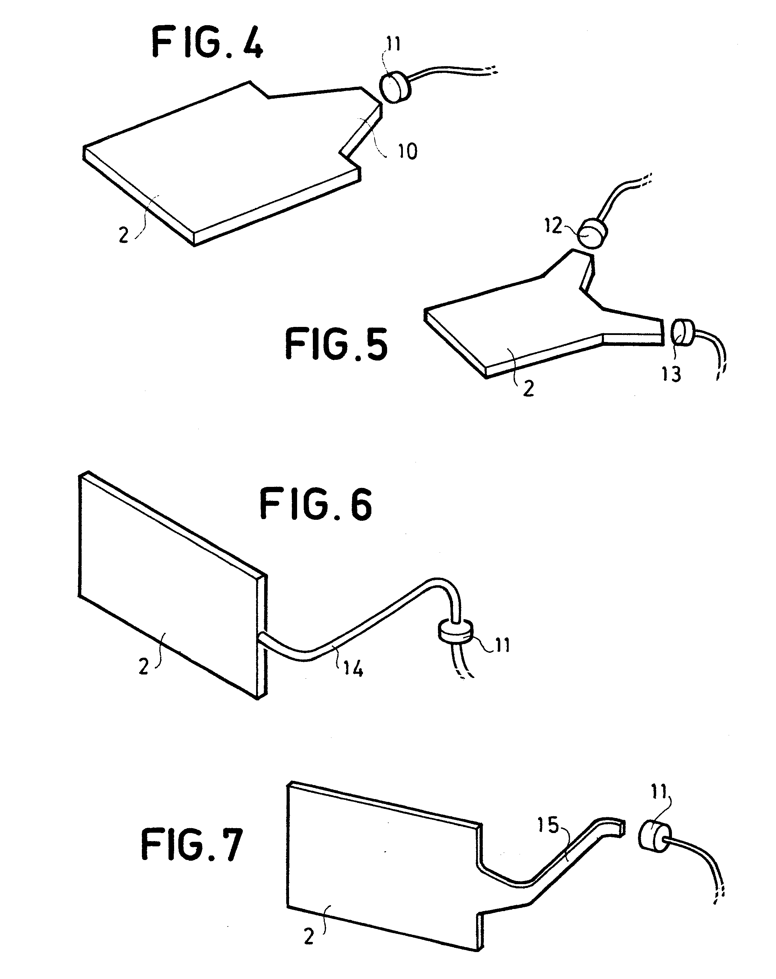

L'efficacité de collection de la lumière peut également être augmentée par interposition d'une optique concentratrice ou focalisatrice entre la tranche de la plaque et la surface sensible du photodétecteur. Ce concentrateur peut avantageusement être constitué par une modification 10 de la forme de la plaque 2 elle-même en forme de coin à deux ou trois dimensions comme représenté à la figure 4. Les coins de la plaque peuvent jouer ce rôle sans augmentation sensible de l'encombrement de l'ensemble, comme représenté à la figure 5.

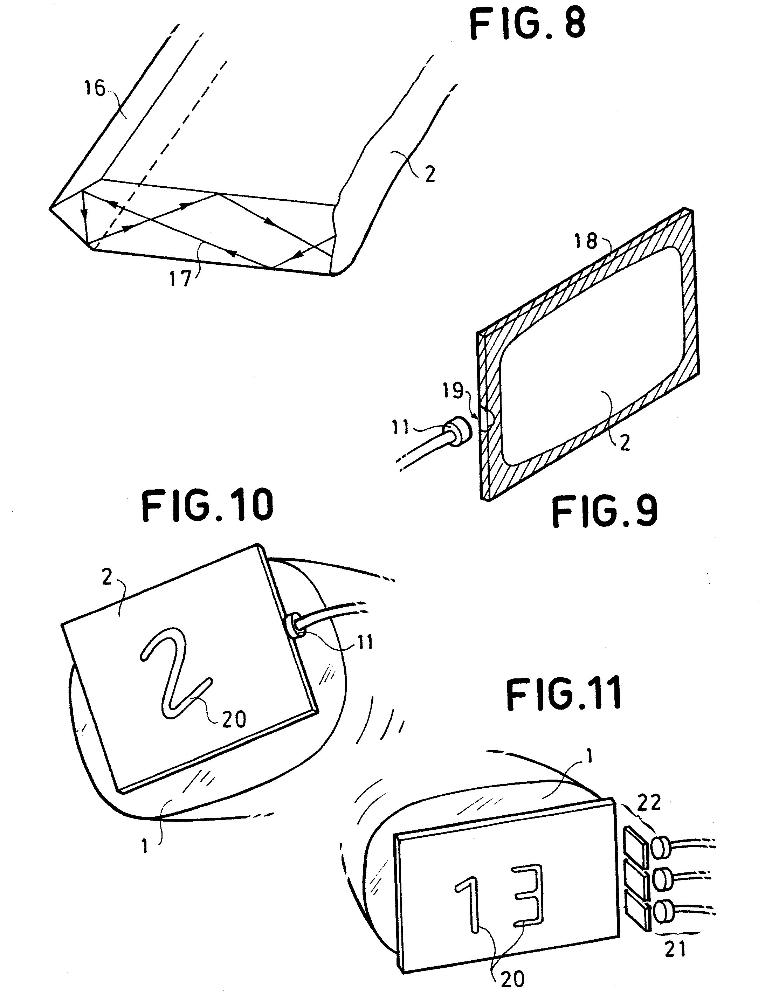

Un ou plusieurs guides d'onde 14 peuvent être interposés entre le bord de l'écran 2 et le ou les photodétecteurs 11 de façon à pouvoir placer ces derniers proches de l'électronique de détection. Ce guide peut être constitué d'un barreau de matière transparente, éventuellement coudé, d'un faisceau de fibres optiques ou d'une fibre unique comme représenté à la figure 6. Il peut affecter la forme d'un cône afin de jouer également le rôle de concentrateur. Enfin, le guide peut être formé par un appendice 1 de l'écran lui-même obtenu par exemple par découpage ou par étirage comme représenté à la figure 7.

L'efficacité de collection du ou des photodétecteurs utilisés est très augmentée si la surface de la tranche de la plaque non directement en regard des détecteurs renvoie la lumière dans la plaque en conservant à chaque rayon une inclinaison correspondant à la réflexion interne totale. Ceci peut être obtenu en déposant une couche réflectrice sur la tranche de la plaque, ou en mettant la tranche en contact avec un matériau réflectif, ou encore en usinant la tranche en biseau 16 de façon à obtenir la réflexion interne totale sur le dièdre ainsi formé comme représenté à la figure 8. Dans le cas de la couche ou du matériau réfléchissant, il peut être avantageux d'étendre la surface couverte aux régions 18 des faces de la plaque immédiatement voisines de la tranche, afin d'atténuer l'influence de la lumière guidée vers le détecteur par réfraction et réflection de Fresnel comme représenté à la figure 9.

Les fixations de la plaque sur le cadre de protection de la tranche peuvent se révéler des pièges où une partie importante de la lumière guidée par la plaque est absorbée. Si les points de contact sont réfléchissants, ils constituent des points d'entrée permanents pour la lumière ambiante et celle issue du tube cathodique. S'ils sont absorbants, l'effet de piège peut être grandement augmenté. Une solution consiste à revêtir les zones concernées de la plaque d'une épaisseur peu importante d'un matériau transparent d'indice inférieur à celui de la plaque qui jouera vis-à-vis de celle-ci un rôle de confinement de la lumière. Une autre solution, plus simple de mise en oeuvre, consiste à utiliser aux points de contact un matériau non réfléchissant qui ne soit pas susceptible d'établir avec la plaque un contact optique. Le velours noir, par exemple, fait parfaitement l'affaire.

L'utilisation, sur une ou deux faces de la plaque, de couches antireflets diminue fortement, au sein du signal, le bruit de fond dû à la lumière ambiante et à celle provenant de l'écran cathodique. Si l'effet d'approche sans contact d'un objet diffusant sur le signal doit au contraire être augmenté, des couches augmentant la réflexion de Fresnel peuvent être utilisées.

8

La proximité de la plaque avec l'écran cathodique améliore la sensibili té et la résolution du dispositif. Si, comme c'est souvent le cas, l'écran est galbé, en calotte de sphère ou de cylindre par exemple, la plaque peut avantageusement être galbée également de façon à minimiser les écarts de distance plaque-écran.

Les signaux optiques parasites provenant directement de l'écran peuvent être utilisés par l'électronique de traitement du signal de façon à rendre celle-ci indépendante de l'information de synchronisation en provenance de l'électronique de balayage. Un cas particulier consiste à créer, par gravure par exemple, des points, lignes ou zones diffusantes sur l'écran, qui sont reçus comme autant d'informations temporelles permanentes par l'électronique de traitement du signal.

Ceci peut être utilisé pour fournir à l'électronique de l'écran des informations lui permettant de s'auto-calibrer (focalisation, linéarité, convergences...).

Le dispositif de l'invention peut exploiter l'effet ci-dessus pour saisir une figure bidimensionnelle complexe et non plus seulement la position d'un point. Par exemple, un dessin 20 au crayon gras ou au feutre sur la plaque se traduira, en présence d'un balayage (non noir) suffisamment uniforme, par l'obtention d'un signal instantané qui donne la connaissance complète de ce dessin comme représenté à la figure 10.

Pour obtenir, pour l'application ci-dessus une information sur la couleur du dessin 20, il peut être intéressant d'utiliser un écran dont le spectre soit large (par exemple blanc) et de mettre en oeuvre plusieurs détecteurs de réponse spectrale différente, par interposition de filtres 22 par exemple, comma représenté à la figure 11. Si l'objet réémet la lumière dans une bande spectrale différente (fluorescente par exemple), une très bonne discrimination peut être également obtenue de cette façon.

Une application spécifique des effets ci-dessus est la reconnaissance de formes ou la mesure d'objets différents susceptibles d'être mis en contact ou à proximité immédiate de la plaque. Parmi les applications possibles, on peut citer la reconnaissance et l'identification par apposition de la main (paume à plat) ou de la semelle, la mesure et la reconnaissance d'objets plats et humides (poissons), l'acquisition automatique directe d'empreintes digitales, la lecture de codes du type "code-barre" et de caractères imprimés.

Il va de soi que l'invention s'applique avant tout aux écrans de type tube cathodique à balayage "télévision". Elle est néanmoins également parfaitement adaptée à tous les autres types de balayage, ainsi qu'aux autres types d'écrans à balayage, par exemple aux écrans plats de type plasma ou aux écrans à cristaux liquides. Dans le cas des écrans reposant sur un phénomène de diffusion et non d'émission de lumière, il va de soi qu'une source extérieure de lumière (située soit devant, soit derrière l'écran) peut être utilisée. Si la seul fonction du dispositif est l'acquisition de la position du ou des points diffusants, la lumière extérieure nécessaire peut être guidée par la plaque elle-même ou par une autre plaque située parallèlement à la première.

L'application directe sur l'entrée "vidéo" du signal de sortie du dispositif produit, selon la polarité, une tache claire ou foncée qui semble suivre la position du doigt. L'effet produit est spectaculaire et peut être utilisée dans la fabrication de dispositifs ludiques ou publicitaires très simples.

# REVENDICATIONS

1. Dispositif sensitif d'affichage comportant un écran (1) à balayage, sur lequel se déplace une tache lumineuse, des moyens de détection du pointage d'au moins une position spécifique de cet écran (1) délivrant un signal (S(t)) relatif à cette position et des moyens de traitement de ce signal (34), caractérisé en ce qu'il comporte en outre un guide d'onde lumineuse plan en matériau transparent disposé devant cet écran à balayage (1), un moyen diffusant permettant ce pointage par contact avec ce guide d'onde, les moyens de détection du pointage comportant des moyens photodétecteurs couplés à au moins une extrémité de ce guide d'onde, ce guide d'onde plan transmettant intégralement la lumière issue de la tache lumineuse en absence de pointage d'une position et piègeant cette lumière issue de la tache lumineuse lors du pointage d'au moins une position par recouplage dans ce guide d'onde de la lumière transmise à travers ce guide d'onde jusqu'à l'objet diffusant et transmission de cette lumière par réflexions successives vers ces moyens photodétecteurs.

2. Dispositif selon la revendication 1, caractérisé en ce que le guide d'onde plan est une plaque en matériau (2) transparent.

3. Dispositif selon la revendication 2, caractérisé en ce que les moyens photodétecteurs comprennent au moins un photodétecteur (11) couplé à la tranche de cette plaque (2).

4. Dispositif selon la revendication 3, caractérisé en ce qu'une optique focalisatrice (10) est disposée entre la tranche de cette plaque (2) et la surface sensible de chaque photodétecteur.

5. Dispositif selon la revendication 4, caractérisé en ce que cette plaque (2) comporte au moins une découpe (10) en forme de coin à laquelle est couplé un photodétecteur.

6. Dispositif selon la revendication 3, caractérisé en ce qu'un guide d'onde (14) est interposé entre le bord de la plaque et chaque photodétecteur.

7. Dispositif selon la revendication 6, caractérisé en ce que ce guide d'onde (14) comporte un barreau de matière transparente.

8. Dispositif selon la revendication 7, caractérisé en ce que ce guide d'onde (14) comporte au moins une fibre optique.

9. Dispositif selon la revendication 3 caractérisé en ce que la plaque (2) comporte une couche réflectrice (18) déposée sur sa tranche.

10. Dispositif selon la revendication 3, caractérisé en ce que la plaque (2) a une tranche découpée en forme de biseau (16).

11. Dispositif selon la revendication 3, caractérisé en ce que la plaque a une forme galbée.

12. Dispositif selon la revendication 3, caractérisé en ce que la plaque (2) comporte des points diffusants disposés sur sa surface non située du côté de l'écran (1).

FIG.1

FIG.2

FIG.3

2/4

0141729

0141729

3 / 4

FIG. 4

FIG. 5

FIG. 6

FIG. 7

FIG. 8

16

2

17

FIG.9

18

19

11

2

FIG.10

2

2

20

11

1

FIG.11

1

22

13

20

21